# EUROPEAN PATENT APPLICATION

(11) **EP 3 543 934 A1**
(43) Date of publication of application: **25.09.2019**
(21) Application number: 17876553.3
(22) Date of filing: 14.11.2017
(51) Int. Cl.: G06Q 20/32, G06Q 20/22, G06Q 20/38

(54) **MOBILE DEVICE AND METHOD FOR PROVIDING DATA FOR PRODUCT PAYMENT**

(30) Priority: 29.11.2016 KR 20160160782
(71) Applicant: Samsung Electronics Co., Ltd., Suwon-si, Gyeonggi-do 16677 (KR)
(72) Inventor: KIM, Myung-sik, Gyeonggi-do 16677 (KR); LEE, Dong-chang, Gyeonggi-do 16677 (KR); HAN, Seung-hoon, Gyeonggi-do, 16677 (KR); NA, In-hak, Gyeonggi-do 16677 (KR)
(74) Representative: Gulde & Partner
(86) International application number: PCT/KR2017/012826
(87) International publication number: WO 2018/101647

(57) **Abstract**

Provided are a method and apparatus for providing data for product payment. A method of providing, by a mobile device, data for product payment includes: receiving an identifier of a second mobile device from the second mobile device through short-range communication; adding the second mobile device to a payment group including a first mobile device, based on the received identifier of the second mobile device; transmitting group information of the payment group to a payment server; transmitting identification information of the payment group to a shop terminal for payment for a product; and receiving, from the payment server, a payment authentication request for a payment amount of the first mobile device allocated to the first mobile device from among a total payment amount of the product.

## Description

### TECHNICAL FIELD

The present disclosure relates to a mobile device and method for providing data for product payment (i.e., payment for a product), and more particularly, to a method of performing split product payment (i.e., split payment for a product) by using a payment group including a first mobile device and a second mobile device, and a mobile device using the method.

### BACKGROUND ART

As data processing technology and network technology develop, users may pay for products and services by using various devices. For example, a user may conveniently pay for a product or service of an offline store by using a mobile device. Meanwhile, there may be a case where several persons pay for one product or service in a split manner. Accordingly, there is an increasing need for a method of easily making a payment by using mobile devices when a plurality of users make a split payment for one product or service.

### DESCRIPTION OF EMBODIMENTS

### TECHNICAL PROBLEM

Provided are a mobile device and method for providing data for product payment.

### SOLUTION TO PROBLEM

Some embodiments may provide a mobile device and method for adding another mobile device to a payment group and providing data to a payment server and a shop terminal for product payment.

Also, some embodiments may provide a mobile device and method for adding another mobile device to a payment group by using a phone number of the mobile device or a vehicle number of a user of the mobile device.

Also, some embodiments may provide a mobile device and method for adding a contacted mobile device to a payment group as a contact is detected.

### BRIEF DESCRIPTION OF DRAWINGS

FIG. 1 is a diagram illustrating an example in which a first mobile device 1000 provides data to a payment server 3000 and a shop terminal 4000, according to some embodiments.
FIG. 2 is a flowchart of a method by which the first mobile device 1000 provides data to the payment server 3000 and the shop terminal 4000, according to some other embodiments.
FIG. 3 is a diagram illustrating a method by which the first mobile device 1000 provides data to a vehicle terminal 6500, the payment server 3000, and the shop terminal 4000, according to some embodiments.
FIG. 4 is a flowchart of a method by which the first mobile device 1000 provides data to the vehicle terminal 6500, the payment server 3000, and the shop terminal 4000, according to some embodiments.
FIG. 5 is a diagram illustrating a method by which the first mobile device 1000 provides data, according to some embodiments.
FIG. 6 is a diagram illustrating a method by which the payment server 3000 provides data, according to some embodiments.
FIG. 7 is a diagram illustrating a method by which the first mobile device 1000 adds a second mobile device 2000 and a third mobile device 2100 to a payment group, according to some embodiments.
FIG. 8 is a diagram illustrating a method of adding contacted mobile devices to a payment group, according to some embodiments.
FIG. 9 is a diagram illustrating a method of adding contacted mobile devices to a payment group, according to some embodiments.
FIG. 10 is a flowchart of a method of adding contacted mobile devices to a payment group, according to some embodiments.
FIG. 11 is a diagram illustrating a method by which the first mobile device 1000 adds the second mobile device 2000 to a payment group, according to some embodiments.
FIG. 12 is a flowchart of a method by which the first mobile device 1000 adds the second mobile device 2000 to a payment group, according to some embodiments.
FIG. 13 is a diagram illustrating an example in which an item of a product to be paid for is displayed on the first mobile device 1000, according to some embodiments.
FIGS. 14 and 15 are block diagrams of the first mobile device 1000 according to some embodiments.
FIG. 16 is a block diagram of the payment server 3000 according to some embodiments.

### BEST MODE

According to an aspect of the present disclosure, a first mobile device includes: a memory storing at least one program; at least one communication unit transmitting/receiving data to/from a shop terminal, a payment server, and a second mobile device; and a processor executing the at least one program to provide data for product payment, wherein the at least one program includes instructions for performing: receiving an identifier of the second mobile device from the second mobile device through short-range communication; adding the second mobile device to a payment group including the first mobile device, based on the received identifier of the second mobile device; transmitting group information of the payment group to the payment server; transmitting identification information of the payment group to the shop terminal for payment for a product; and receiving, from the payment server, a payment authentication request for a payment amount of the first mobile device allocated to the first mobile device among a total payment amount of the product, wherein the group information includes information about a payment amount of the first mobile device and information about a payment amount of the second mobile device.

According to another aspect of the present disclosure, a method of providing data for product payment includes: receiving an identifier of a second mobile device from the second mobile device through short-range communication; adding the second mobile device to a payment group including a first mobile device, based on the received identifier of the second mobile device; transmitting group information of the payment group to a payment server; transmitting identification information of the payment group to a shop terminal for payment for a product; and receiving, from the payment server, a payment authentication request for a payment amount of the first mobile device allocated to the first mobile device among a total payment amount of the product, wherein the group information includes information about a payment amount of the first mobile device and information about a payment amount of the second mobile device.

According to another aspect of the present disclosure, a non-transitory computer-readable recording medium stores a program that, when executed by a computer, performs the method of the above aspect.

### MODE OF DISCLOSURE

Hereinafter, embodiments of the present disclosure will be described in detail with reference to the accompanying drawings so that those of ordinary skill in the art may easily implement the embodiments. However, the present disclosure may be embodied in various different forms and should not be construed as being limited to the embodiments described herein. Also, portions irrelevant to the description of the present disclosure will be omitted in the drawings for a clear description of the present disclosure, and like reference numerals will denote like elements throughout the specification.

Throughout the specification, when an element is referred to as being "connected" to another element, it may be "directly connected" to the other element or may be "electrically connected" to the other element with one or more intervening elements therebetween. Also, when something is referred to as "including" a component, another component may be further included unless specified otherwise.

Hereinafter, the present disclosure will be described in detail with reference to the accompanying drawings.

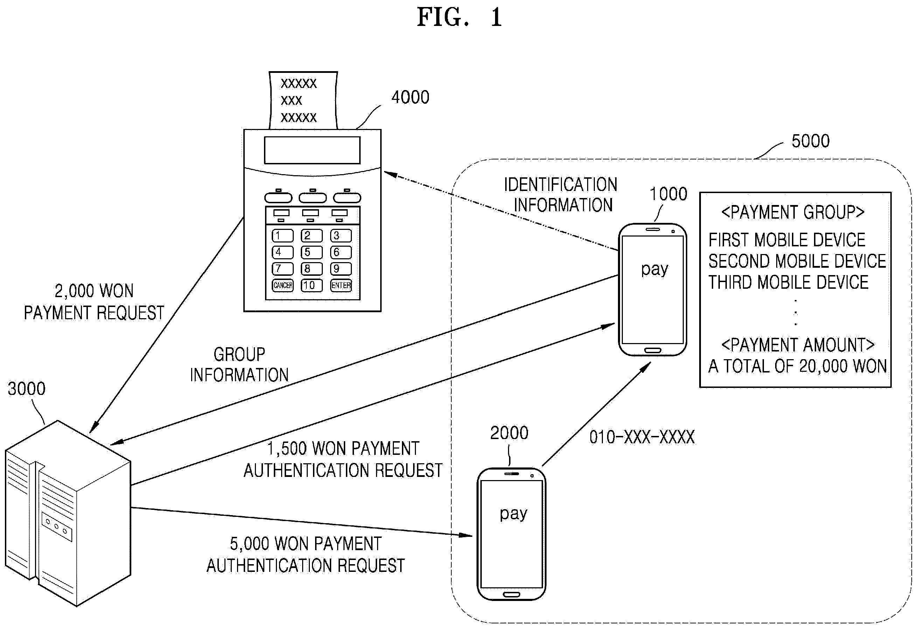

FIG. 1 is a diagram illustrating an example in which a first mobile device 1000 provides data to a payment server 3000 and a shop terminal 4000, according to some embodiments.

Referring to FIG. 1, the first mobile device 1000 may perform split product payment (i.e., split payment for a product) by using identification information of a payment group 5000 including the first mobile device 1000 and a second mobile device 2000. The identification information of the payment group 5000 may be information representing the payment group 5000. When receiving the identification information of the payment group 5000, the payment server 3000 may specify the payment group 5000 to perform product payment. For example, the identification information of the payment group 5000 may be a virtual credit card number representing the payment group 5000, but is not limited thereto.

The first mobile device 1000 may receive an identifier of the second mobile device 2000 through short-range communication and add the second mobile device 2000 to the payment group 5000 including the first mobile device 1000. Here, the payment group 5000 may mean a plurality of mobile devices that are used to pay for one product or service together. Also, the identifier of a mobile device may be used by the first mobile device 1000 to add the mobile device to the payment group 5000. For example, the identifier of the mobile device may be at least one of a phone number of the mobile device, a user identification (ID) of a payment application for payment, and a vehicle number of a user of the mobile device, but is not limited thereto.

When the identifier of the mobile device is a phone number, the first mobile device 1000 may receive a phone number of the second mobile device 2000, determine whether the phone number of the second mobile device 2000 is in a phone book stored in the first mobile device 1000, and add the second mobile device 2000 to the payment group 5000. Also, the first mobile device 1000 may transmit group information about the payment group 5000 to the payment server 3000 and receive the identification information of the payment group 5000 from the payment server 3000. For example, the group information about the payment group 5000 of FIG. 1 may include an identifier of the first mobile device 1000, an identifier of the second mobile device 2000, a payment amount (15,000 won) of the first mobile device 1000, and a payment amount (5,000 won) of the second mobile device 2000.

Meanwhile, the first mobile device 1000 may transmit the identification information of the payment group 5000 received from the payment server 3000 to the shop terminal 4000. For example, when the identification information of the payment group 5000 is a virtual credit card number, the first mobile device 1000 may transmit the virtual credit card number to the shop terminal 4000 for product payment (i.e., payment for a product). Also, the shop terminal 4000 may request the payment server 3000 for payment of a total payment amount (20,000 won) of the payment group 5000.

In response to the payment request received from the shop terminal 4000, the payment server 3000 may request the first mobile device 1000 and the second mobile device 2000 for payment authentication of 15,000 won and 5,000 won respectively.

Here, the mobile device may be a smart phone, a tablet personal computer (PC), a mobile phone, a personal digital assistant (PDA), a laptop, a media player, a global positioning system (GPS) device, an e-book terminal, an MP3 player, a digital camera, or any other mobile computing device, but is not limited thereto. Also, the mobile device may be a wearable device such as a watch, glasses, a hair band, or a ring having a communication function and a data processing function.

The payment server 3000 may be a server for authenticating payment and may be operated by at least one operator. The payment server 3000 may be, but is not limited to, one server operated by one operator. Also, the payment server 3000 may include a plurality of servers operated by a plurality of operators. For example, the payment server 3000 may include a server for managing card information about payment and performing payment agency and a server for authenticating payment.

The shop terminal 4000 may be a Point of Sales (POS) terminal used for product payment in an offline store, but is not limited thereto.

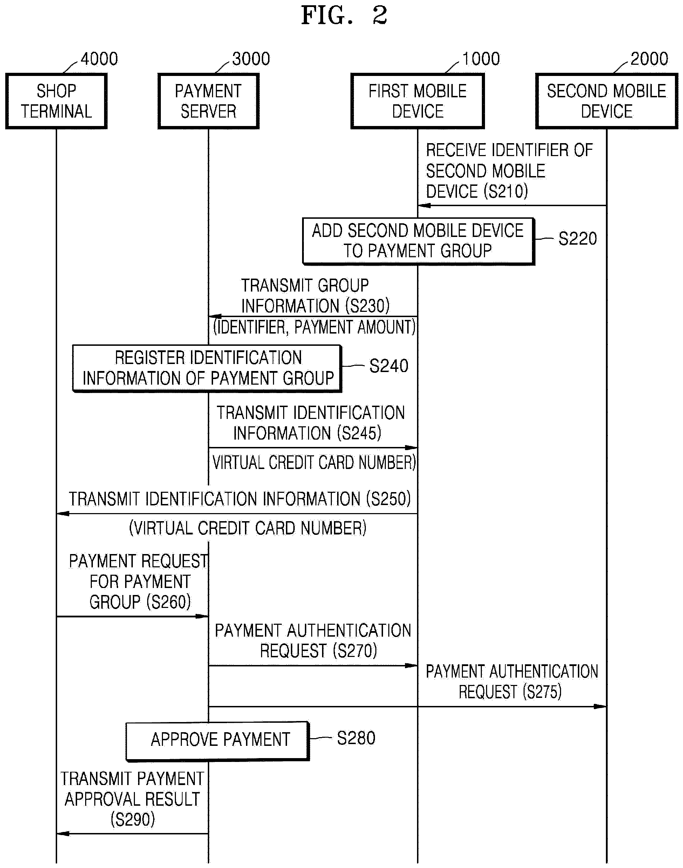

FIG. 2 is a flowchart of a method by which the first mobile device 1000 provides data to the payment server 3000 and the shop terminal 4000, according to some other embodiments.

In operation S210, the first mobile device 1000 may receive the identifier of the second mobile device 2000 from the second mobile device 2000. Here, the identifier of the mobile device may be used by the first mobile device 1000 to identify mobile devices to be added to the payment group 5000 and may include at least one of the phone number of the mobile device, the user ID of a payment application for payment, and the vehicle number of the user of the mobile device, but is not limited thereto.

In operation S220, the first mobile device 1000 may add the second mobile device 2000 to the payment group 5000. Particularly, when the phone number of the second mobile device 2000 is in the phone book stored in a memory, the first mobile device 1000 may add the second mobile device 2000 to the payment group 5000 including the first mobile device 1000. Accordingly, the payment group 5000 may include the first mobile device 1000 and the second mobile device 2000.

In operation S230, the first mobile device 1000 may transmit the group information to the payment server 3000. Here, the group information may include the identifiers of a plurality of mobile devices included in the payment group 5000. Also, the group information may include the identifier of the first mobile device 1000, the identifier of the second mobile device 2000, the payment amount of the first mobile device 1000, and the payment amount of the second mobile device 2000. Also, the group information may include the payment rate of the first mobile device 1000 and the second mobile device 2000, instead of the payment amount of the first mobile device 1000 and the payment amount of the second mobile device 2000.

In operation S240, the payment server 3000 may register the identification information of the payment group 5000 based on the group information received from the first mobile device 1000. Here, the identification information of the payment group 5000 may be a virtual credit card number that the first mobile device 1000 provides to the shop terminal 4000 for product payment. That is, the payment server 3000 may identify the payment group 5000 through the group information, register a virtual credit card number corresponding to the identified payment group 5000, and request payment authentication from each of a plurality of mobile devices included in the payment group 5000 when receiving a payment request including the virtual credit card number.

In operation S245, the payment server 3000 may transmit the identification information of the payment group 5000 registered in operation S240 to the first mobile device 1000.

In operation S250, the first mobile device 1000 may transmit the identification information of the payment group 5000 to the shop terminal 4000 for product payment. For example, the first mobile device 1000 may contact the shop terminal 4000 to transmit the identification information of the payment group 5000 to the shop terminal 4000.

In operation S260, the shop terminal 4000 may request the payment server 3000 for payment for the payment group 5000 based on the identification information of the payment group 5000 received from the first mobile device 1000. For example, the shop terminal 4000 may request the payment server 3000 for split product payment by transmitting the payment amount and the identification information of the payment group 5000 to the payment server 3000. Here, the shop terminal 4000 may request the payment server 3000 for payment of the total payment amount of the payment group 5000.

In operations S270 to S275, based on the payment request received from the shop terminal 4000, the payment server 3000 may request payment authentication of a split payment amount from each of the first mobile device 1000 and the second mobile device 2000 included in the payment group 5000. For example, the payment server 3000 may compare the identification information of the payment group 5000 received from the shop terminal 4000 with the identification information of the payment group 5000 registered in operation S240, to specify the payment group 5000. After specifying the payment group 5000, the payment server 3000 may use the group information about the payment group 5000 to identify the first mobile device 1000 and the second mobile device 2000 included in the payment group 5000 and determine the split payment amounts thereof. Meanwhile, by operations S270 to S275, the split payment amounts received by the respective mobile devices may be equal to or different from each other.

In operation S280, the payment server 3000 may approve the product payment based on the response to the payment authentication request from the first mobile device 1000 and the second mobile device 2000.

In operation S290, the payment server 3000 may transmit the payment approval result to the shop terminal 4000.

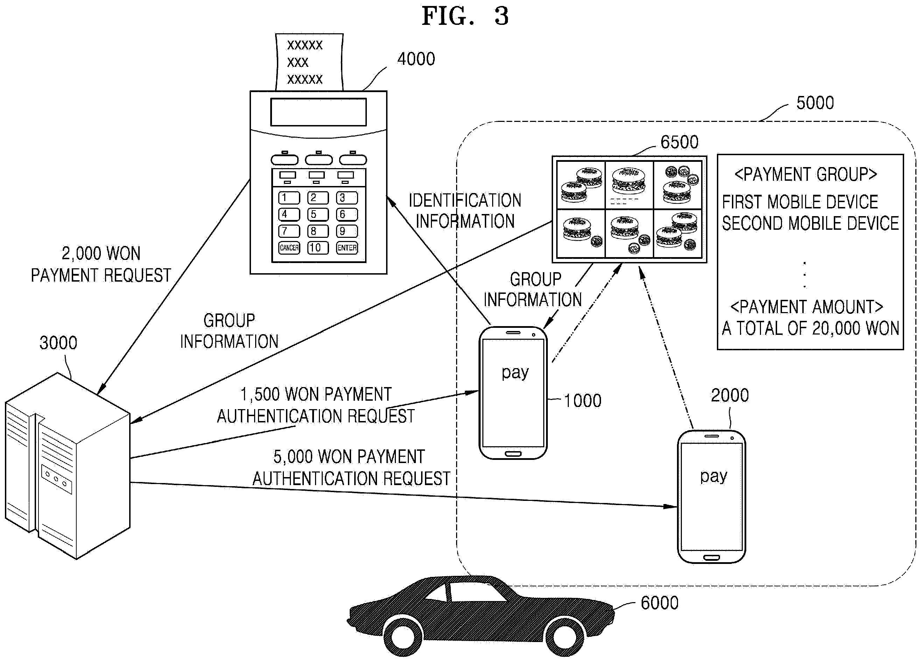

FIG. 3 is a diagram illustrating a method by which the first mobile device 1000 provides data to a vehicle terminal 6500, the payment server 3000, and the shop terminal 4000, according to some embodiments.

Referring to FIG. 3, when the first mobile device 1000 and the second mobile device 2000 included in the payment group 5000 are in a vehicle 6000, the vehicle terminal 6500 included in the vehicle 6000 may add the first mobile device 1000 and the second mobile device 2000 to the payment group 5000.

Here, the vehicle terminal 6500 may be an electronic device installed in the vehicle 6000 and may control various devices of the vehicle 6000 and communicate with mobile devices to provide various services to the user. Various internal devices constituting the vehicle terminal 6500 may be arranged at a preset position in the vehicle 6000.

Also, the vehicle terminal 6500 may generate the payment group 5000 including the first mobile device 1000 and the second mobile device 2000 and transmit the group information about the payment group 5000 to the first mobile device 1000 such that the first mobile device 1000 may request the shop terminal 4000 and the payment server 3000 for split product payment.

When the identifier of the mobile device is the phone number of the mobile device, the first mobile device 1000 and the second mobile device 2000 in the vehicle 6000 may transmit the phone number to the vehicle terminal 6500 and the vehicle terminal 6500 may add the first mobile device 1000 and the second mobile device 2000 to the payment group 5000 according to the received phone number. Also, the vehicle terminal 6500 may transmit the group information about the payment group 5000 to the payment server 3000 and the first mobile device 1000. Meanwhile, according to an embodiment, the payment server 3000 may receive the group information from the first mobile device 1000 instead of receiving the group information from the vehicle terminal 6500.

A method by which the first mobile device 1000 provides data to the payment server 3000 and the shop terminal 4000 for product payment after receiving the group information about the payment group 5000 corresponds to that described with reference to FIG. 1, and thus redundant descriptions thereof will be omitted for conciseness.

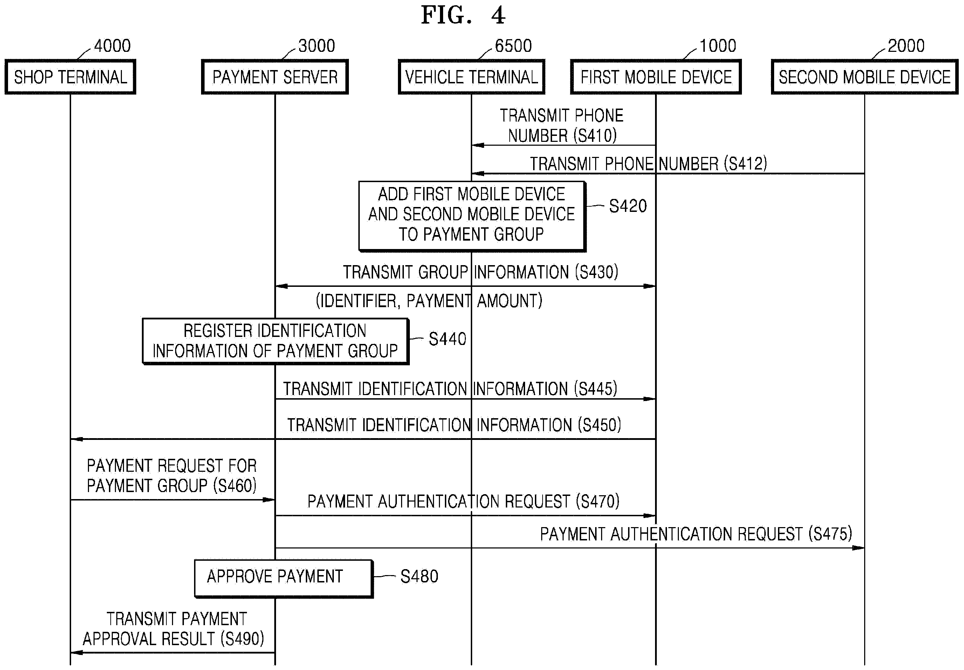

FIG. 4 is a flowchart of a method by which the first mobile device 1000 provides data to the vehicle terminal 6500, the payment server 3000, and the shop terminal 4000, according to some embodiments.

In operations S410 to S412, when the identifier of the mobile device is the phone number of the mobile device, the first mobile device 1000 and the second mobile device 2000 may transmit the phone number of the first mobile device 1000 and the phone number of the second mobile device 2000 to the vehicle terminal 6500 respectively.

In operation S420, the vehicle terminal 6500 may add the first mobile device 1000 and the second mobile device 2000 to the payment group 5000 by using the received phone numbers.

In operation S430, the vehicle terminal 6500 may transmit the group information about the payment group 5000 to the payment server 3000 and the first mobile device 1000. Here, the group information may include the identifiers of a plurality of mobile devices included in the payment group 5000 and may further include the payment amounts corresponding to the plurality of mobile devices.

Operations S440 to S490 correspond to operations S240 to S290 of FIG. 2, and thus redundant descriptions thereof will be omitted for conciseness.

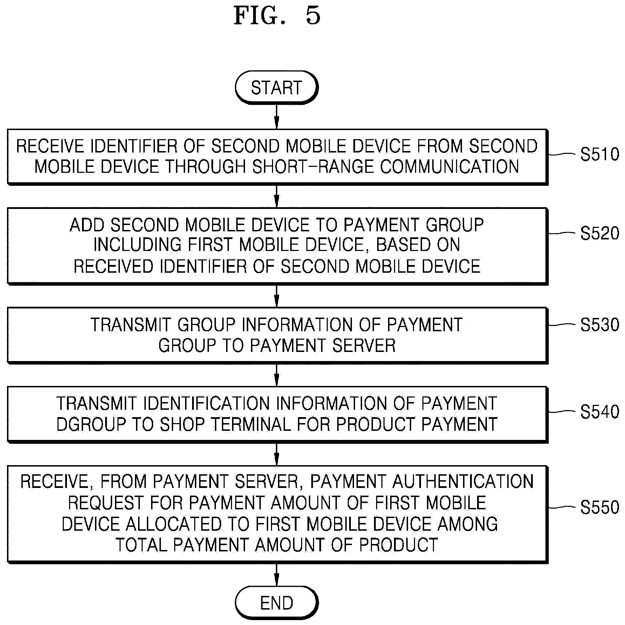

FIG. 5 is a diagram illustrating a method by which the first mobile device 1000 provides data, according to some embodiments.

In operation S510, the first mobile device 1000 may receive the identifier of the second mobile device 2000 from the second mobile device 2000 through short-range communication. For example, when the second mobile device 2000 is located in a short-range communication coverage region of the first mobile device 1000, the first mobile device 1000 may receive the identifier of the second mobile device 2000. Here, the short-range communication may include, for example, Bluetooth, Bluetooth Low Energy (BLE), ZigBee, Wi-Fi Direct (WFD), Ultra Wideband (UWB), IrDA, Infrared Data Association (IrDA), and Near Field Communication (NFC), but is not limited thereto.

In operation S520, the first mobile device 1000 may add the second mobile device 2000 to the payment group 5000 including the first mobile device 1000, based on the received identifier of the second mobile device 2000. Also, the first mobile device 1000 may add the second mobile device 2000 to the payment group 5000 as a contact with the second mobile device 2000 is detected.

In operation S530, the first mobile device 1000 may transmit the group information of the payment group 5000 to the payment server 3000. Here, the group information may include information about the payment amount of the first mobile device 1000 and information about the payment amount of the second mobile device 2000. Also, the group information may include the identifier of the first mobile device 1000, the identifier of the second mobile device 2000, the payment amount of the first mobile device 1000, and the payment amount of the second mobile device 2000. Here, the identifier of the first mobile device 1000 may be at least one of the phone number of the first mobile device 1000, the user ID of the payment application for payment, and the vehicle number of the user of the first mobile device 1000.

Also, the first mobile device 1000 may determine the payment amount of the first mobile device 1000 and the payment amount of the second mobile device 2000. For example, the first mobile device 1000 may equally split the payment amount of the mobile devices included in the payment group 5000 or may determine the payment amounts of the mobile devices based on a user input.

Meanwhile, the first mobile device 1000 may determine the payment rate of the first mobile device 1000 and the payment rate of the second mobile device 2000, wherein the group information may include the determined payment rate of the first mobile device 1000 and the determined payment rate of the second mobile device 2000.

In operation S540, the first mobile device 1000 may transmit the identification information of the payment group 5000 to the shop terminal 4000 for product payment. Here, the identification information of the payment group 5000 may be provided from the payment server 3000 to the first mobile device 1000 and may be registered in the payment server 3000 for payment by the payment group 5000. Particularly, the identification information of the payment group 5000 may be a virtual credit card number representing the payment group 5000.

Meanwhile, the identification information of the payment group 5000 provided to the shop terminal 4000 may be provided from the shop terminal 4000 to the payment server 3000, and the payment amount of the first mobile device 1000 may be determined by the payment server 3000 based on the group information and the identification information of the payment group 5000 provided from the shop terminal 4000 to the payment server 3000.

In operation S550, the first mobile device 1000 may receive, from the payment server 3000, a payment authentication request for the payment amount of the first mobile device 1000 allocated to the first mobile device 1000 among the total payment amount of the product.

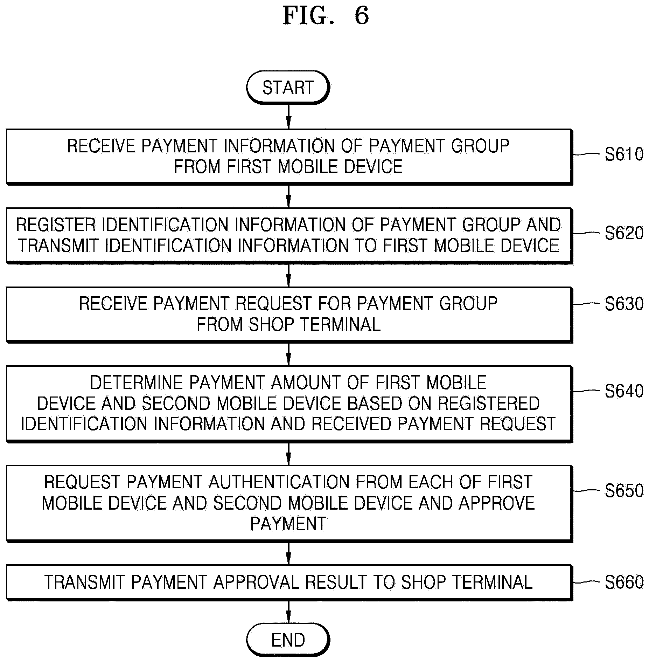

FIG. 6 is a diagram illustrating a method by which the payment server 3000 provides data, according to some embodiments.

In operation S610, the payment server 3000 may receive the group information of the payment group 5000 from the first mobile device 1000.

In operation S620, the payment server 3000 may register the identification information of the payment group 5000 and transmit the identification information of the payment group 5000 to the first mobile device 1000. For example, by using the group information received in operation S610, the payment server 3000 may register a virtual credit card number corresponding to the payment group 5000 and transmit the virtual credit card number to the first mobile device 1000.

In operation S630, the payment server 3000 may receive a payment request for the payment group 5000 from the shop terminal 4000. Here, the payment request received from the shop terminal 4000 may be a payment request for the total payment amount of the payment group 5000. Also, the payment request may include a virtual credit card number obtained from the first mobile device 1000 by the shop terminal 4000.

In operation S640, the payment server 3000 may determine the payment amount of the first mobile device 1000 and the second mobile device 2000 based on the registered identification information and the received payment request. Particularly, the payment server 3000 may determine the payment group 5000 by using the virtual credit card number included in the payment request. Also, a split payment amount for each of the mobile devices may be determined based on the group information corresponding to the determined payment group 5000. For example, the payment server 3000 may determine the split payment amount for each of the mobile devices according to the payment amount of each of the mobile devices included in the group information about the payment group 5000.

In operation S650, the payment server 3000 may request payment authentication from each of the first mobile device 1000 and the second mobile device 2000 and approve the payment based on the response of the first mobile device 1000 and the second mobile device 2000.

In operation S660, the payment server 3000 may transmit the payment approval result to the shop terminal 4000.

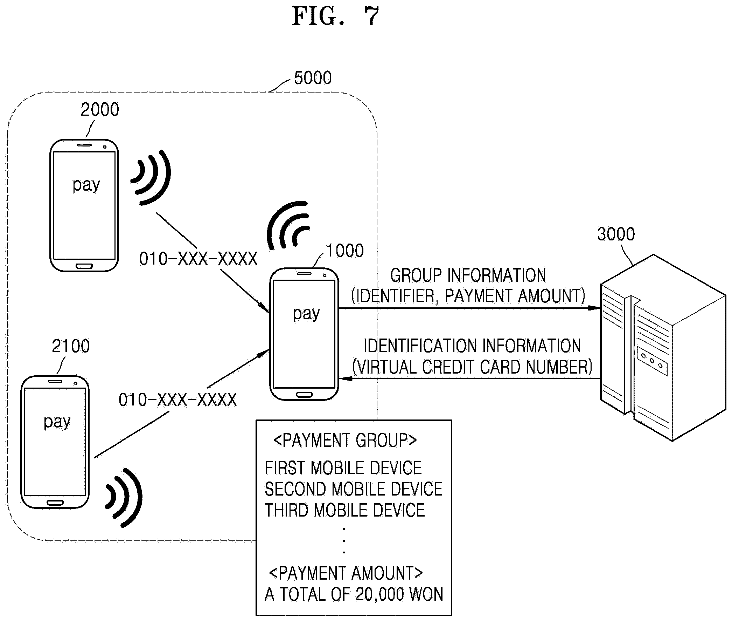

FIG. 7 is a diagram illustrating a method by which the first mobile device 1000 adds the second mobile device 2000 and a third mobile device 2100 to a payment group, according to some embodiments.

Referring to FIG. 7, when the identifier of the mobile device is the phone number of the mobile device, the first mobile device 1000 may add the second mobile device 2000 and the third mobile device 2100 to the payment group 5000 by using the phone number received from the second mobile device 2000 and the third mobile device 2100 located in a communication coverage region. Here, a short-range communication method used by the first mobile device 1000, the second mobile device 2000, and the third mobile device 2100 may be Bluetooth, Bluetooth Low Energy (BLE), Wi-Fi (WLAN), ZigBee, Infrared Data Association (IRDA), Wi-Fi Direct (WFD), or Ultra Wideband (UWB), but is not limited thereto.

The first mobile device 1000 may compare the phone number received from the second mobile device 2000 and the third mobile device 2100 with the phone book stored in the first mobile device 1000 and add the mobile device corresponding to the phone number to the payment group 5000 when the received phone number is in the phone book.

Meanwhile, after the group information about the payment group 5000 is received, the first mobile device 1000 may transmit the group information to the payment server 3000 and receive the identification information of the payment group 5000 from the payment server 3000.

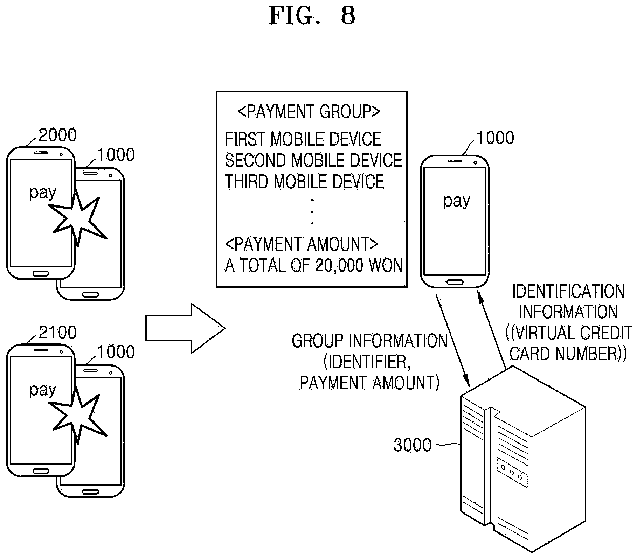

FIG. 8 is a diagram illustrating a method of adding contacted mobile devices to a payment group, according to some embodiments.

According to an embodiment, when a contact with the second mobile device 2000 and the third mobile device 2100 is detected, the first mobile device 1000 may add the contacted mobile devices to the payment group 5000.

Referring to FIG. 8, the second mobile device 2000 and the third mobile device 2100 may contact the first mobile device 1000 in order to transmit/receive data in an NFC manner. Here, the identifier of the second mobile device 2000 and the identifier of the third mobile device 2100 may be transmitted to the first mobile device 1000 through an NFC scheme. Here, the identifier of the mobile device may be at least one of the phone number and the user ID of the payment application for payment, but is not limited thereto as long as it is an element that may identify the mobile device.

Meanwhile, after the group information about the payment group 5000 is received, the first mobile device 1000 may transmit the group information to the payment server 3000 and receive the identification information of the payment group 5000 from the payment server 3000.

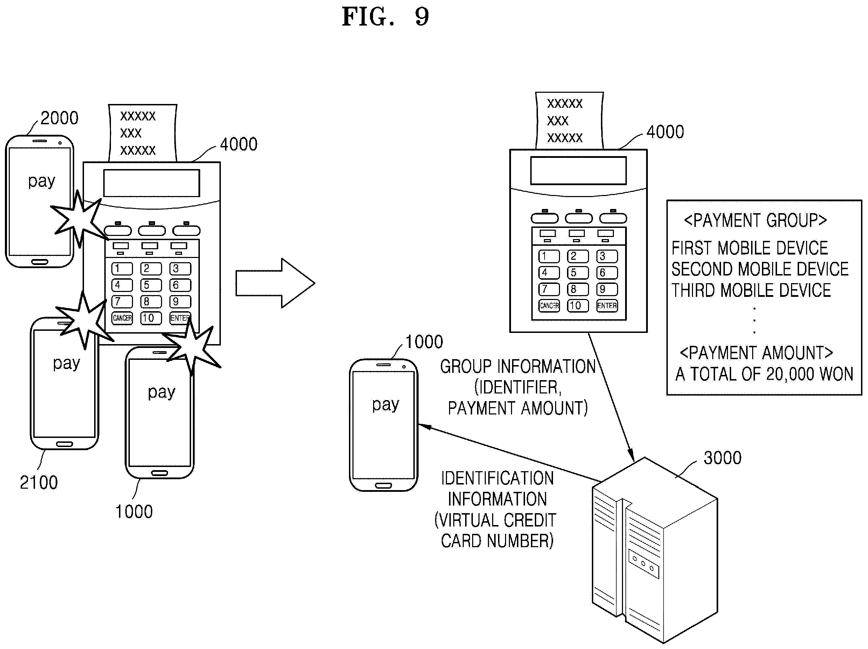

FIG. 9 is a diagram illustrating a method of adding contacted mobile devices to a payment group, according to some embodiments.

The shop terminal 4000 according to an embodiment may add the contacted mobile devices to the payment group 5000 as the contact with the mobile devices is detected.

Referring to FIG. 9, when the contact with the first mobile device 1000, the second mobile device 2000, and the third mobile device 2100 is detected, the shop terminal 4000 may add the first mobile device 1000, the second mobile device 2000, and the third mobile device 2100 to the payment group 5000. The first mobile device 1000, the second mobile device 2000, and the third mobile device 2100 may transmit the identifier to the shop terminal 4000 through contact. In this case, the shop terminal 4000 may transmit the group information about the payment group 5000 to the payment server 3000, and the payment server 3000 may use the received group information to register the identification information of the payment group 5000 in the payment server 3000 and transmit the identification information of the payment group 5000 to the first mobile device 1000.

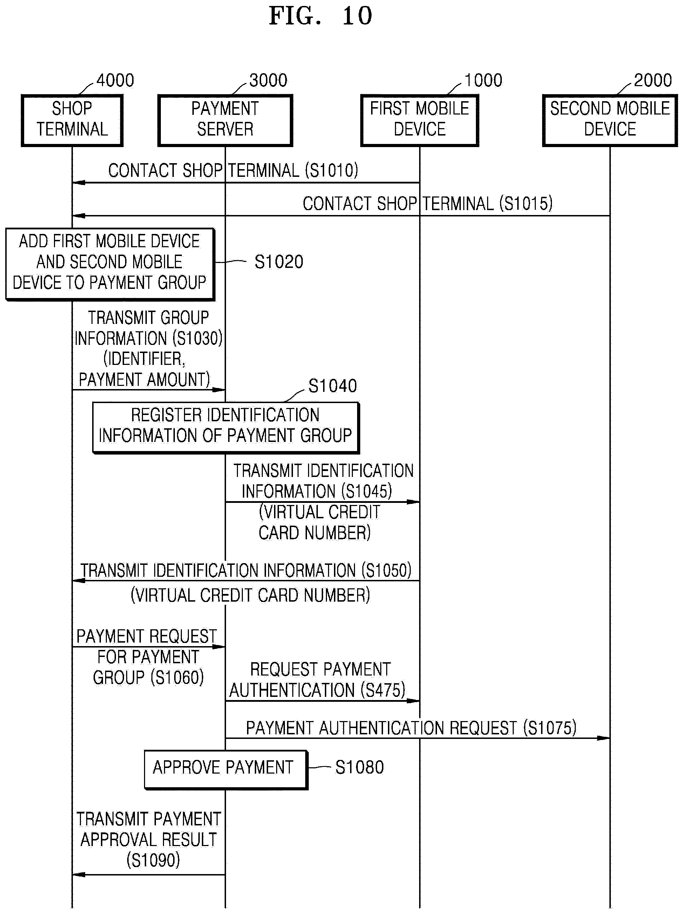

FIG. 10 is a flowchart of a method of adding contacted mobile devices to a payment group, according to some embodiments.

In operations S1010 to S1015, the first mobile device 1000 and the second mobile device 2000 may contact the shop terminal 4000.

In operation S1020, the shop terminal 4000 may receive the identifier of the first mobile device 1000 and the second mobile device 2000 from the contacted first mobile device 1000 and second mobile device 2000 and add the first mobile device 1000 and the second mobile device 2000 to the payment group 5000 by using the received identifier. Here, the identifier of the mobile device may be at least one of the phone number, the user ID of the payment application for payment, and the vehicle number of the user of the mobile device.

In operation S1030, the shop terminal 4000 may transmit the group information about the payment group 5000 to the payment server 3000. Here, the group information may include the identifier of the first mobile device 1000, the identifier of the second mobile device 2000, the payment amount of the first mobile device 1000, and the payment amount of the second mobile device 2000.

In operation S1040, the payment server 3000 may register the identification information of the payment group 5000 according to the group information received from the shop terminal 4000. Here, the identification information may be a virtual credit card number corresponding to the payment group 5000 and may be generated and registered by the payment server 3000.

Operations S1045 to S1090 correspond to operations S245 to S290 of FIG. 2, and thus redundant descriptions thereof will be omitted for conciseness.

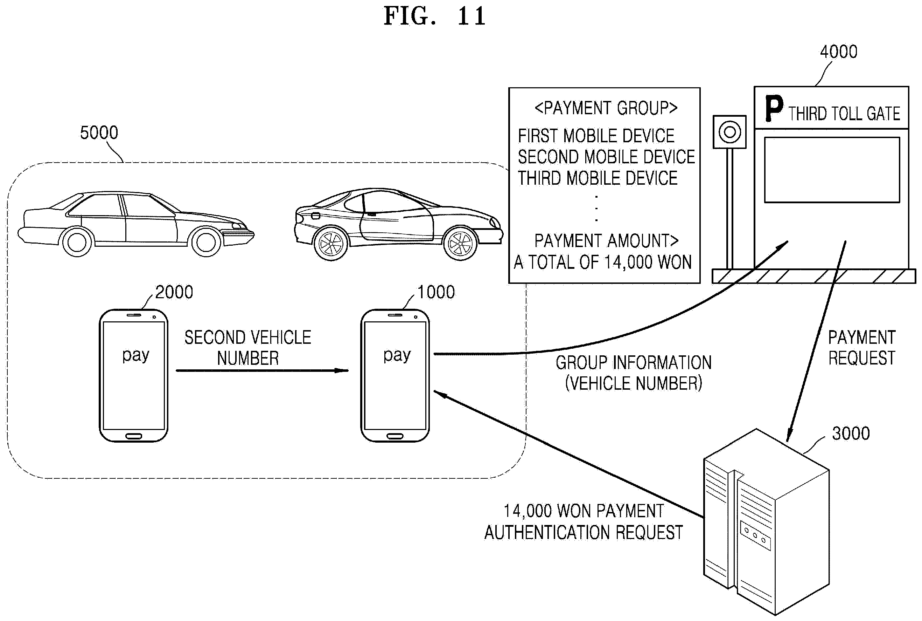

FIG. 11 is a diagram illustrating a method by which the first mobile device 1000 adds the second mobile device 2000 to a payment group, according to some embodiments.

According to an embodiment, the payment server 3000 may request the first mobile device 1000 for payment authentication of the payment group 5000 such that the first mobile device 1000 may pay the total payment amount of the payment group 5000.

Referring to FIG. 11, when paying a parking fee in a parking lot, the first mobile device 1000 included in the payment group 5000 may instead add and pay a parking fee to be paid by the user of the second mobile device 2000 included in the payment group 5000. Here, the shop terminal 4000 may be a parking fee payment terminal but is not limited thereto. Meanwhile, when receiving the vehicle number of the second mobile device 2000, the first mobile device 1000 may add the second mobile device 2000 to the payment group 5000. The first mobile device 1000 may transmit the group information including the vehicle information to the shop terminal 4000 such that the shop terminal 4000 may identify the vehicles corresponding to the mobile devices included in the payment group 5000.

Also, when the shop terminal 4000 requests the payment server 3000 for payment for the payment group 5000, the payment server 3000 may request the first mobile device 1000 for payment authentication of the total payment amount of the payment group 5000 based on the identification information of the payment group 5000.

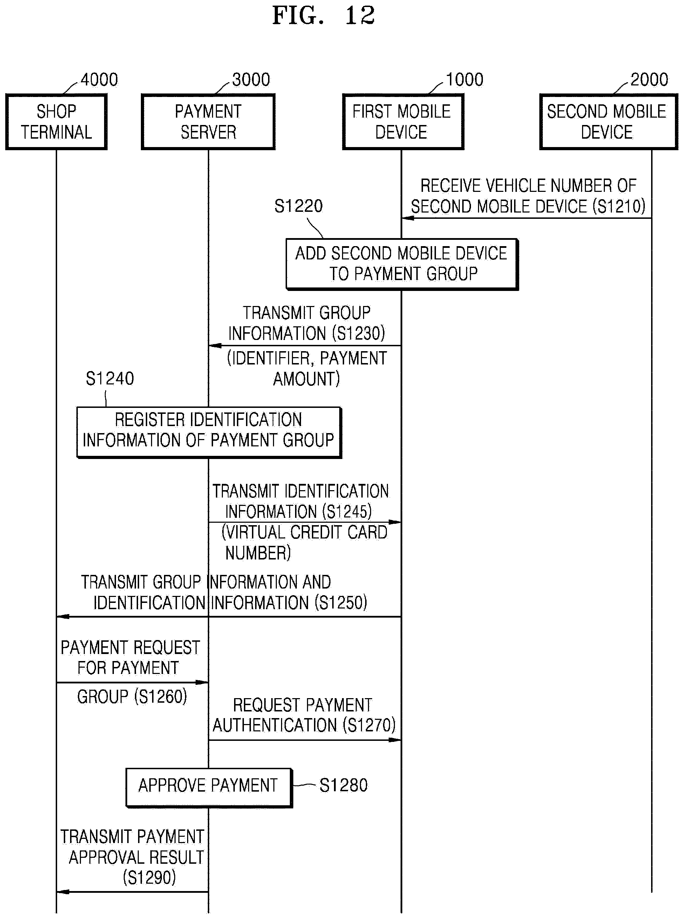

FIG. 12 is a flowchart of a method by which the first mobile device 1000 adds the second mobile device 2000 to a payment group, according to some embodiments.

In operation S1210, when the identifier of the mobile device is the vehicle number of the user of the mobile device, the second mobile device 2000 may transmit the vehicle number of the second mobile device 2000 to the first mobile device 1000.

In operation S1220, the first mobile device 1000 may add the second mobile device 2000 to the payment group 5000 including the first mobile device 1000, based on the received vehicle number of the second mobile device 2000.

In operation S1230, the first mobile device 1000 may transmit the group information of the payment group 5000 to the payment server 3000. Here, the group information may include the vehicle number of the user of the first mobile device 1000, the vehicle number of the user of the second mobile device 2000, the payment amount of the first mobile device 1000, and the payment amount of the second mobile device 2000.

Operations S1240 to S1245 correspond to operations S240 to S245 of FIG. 2, and thus redundant descriptions thereof will be omitted for conciseness.

In operation S1250, the first mobile device 1000 may transmit the group information and the identification information of the payment group 5000 to the shop terminal 4000. The first mobile device 1000 may transmit the group information about the payment group 5000 to the shop terminal 4000 such that the shop terminal 4000 may identify the vehicles corresponding to the mobile devices included in the payment group 5000. Here, the first mobile device 1000 may transmit the group information and the identification information of the payment group 5000 to the shop terminal 4000 at the same time or at different times. Also, the identification information of the payment group 5000 may be a virtual credit card number.

In operation S1260, the shop terminal 4000 may request the payment server 3000 for payment of the total payment amount of the payment group 5000 based on the identification information of the payment group 5000 received from the first mobile device 1000.

In operation S1270, by using the payment request received from the shop terminal 4000, the payment server 3000 may request the first mobile device 1000 for payment authentication of the total payment amount of the payment group 5000.

Operations S1280 to S1290 correspond to operations S280 to S290 of FIG. 2, and thus redundant descriptions thereof will be omitted for conciseness.

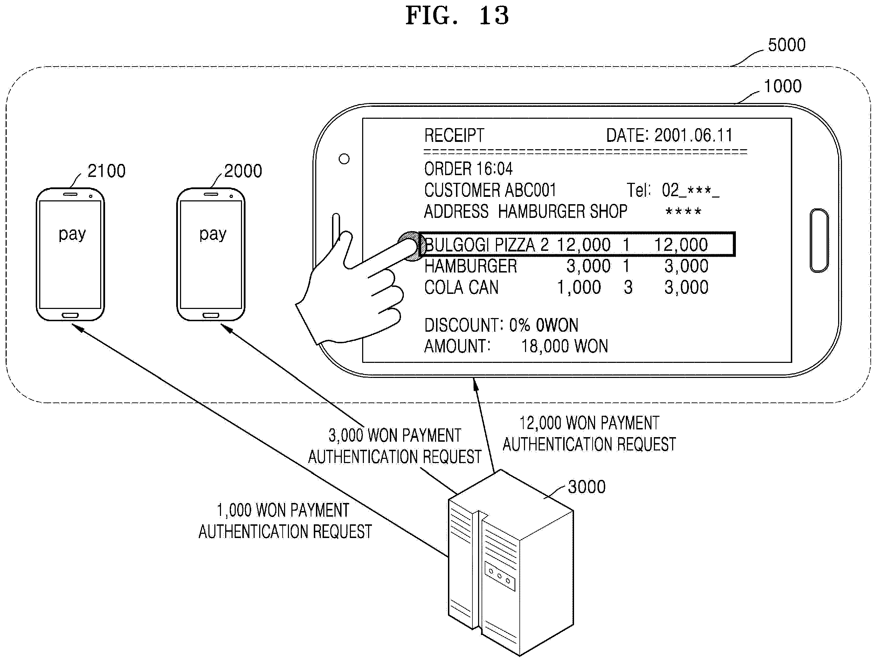

FIG. 13 is a diagram illustrating an example in which an item of the product to be paid for is displayed on the first mobile device 1000, according to some embodiments.

According to an embodiment, the first mobile device 1000 may display an item of the product to be paid for by the payment group 5000. Also, the first mobile device 1000 may determine the split payment amount of a plurality of mobile devices included in the payment group 5000, based on a user input.

Referring to FIG. 13, the first mobile device 1000 may display a receipt including an item of the product to be paid for. Here, the first mobile device 1000 may determine a detailed product or a split payment amount to be paid by the second mobile device 2000 included in the payment group 5000. Also, the payment server 3000 may receive the determined split payment amount from the first mobile device 1000 and request the second mobile device 2000 for payment authentication of the split payment amount.

Also, according to an embodiment, when the split payment amounts of a plurality of mobile devices included in the payment group 5000 is input, when the sum of the split payment amounts is less than the total payment amount of the payment group 5000, the payment server 300 may request additional payment authentication of the difference amount from at least one mobile device included in the payment group 5000.

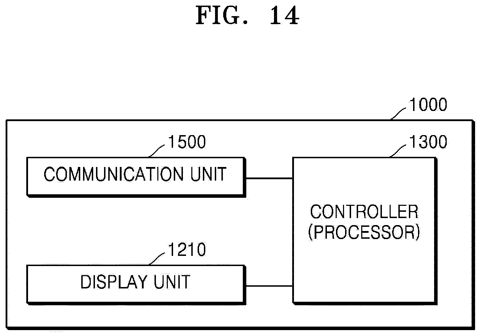

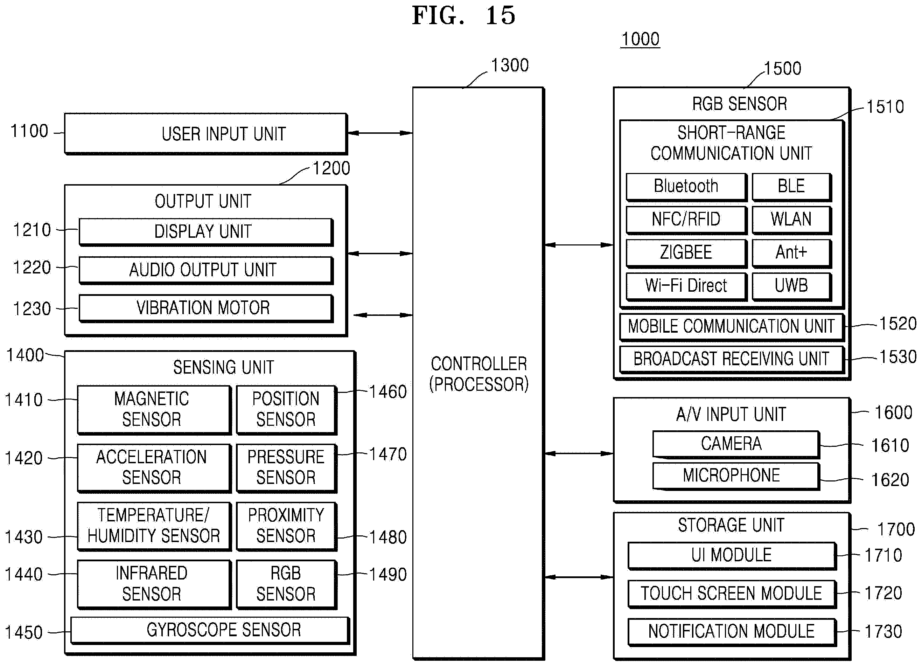

FIGS. 14 and 15 are block diagrams of the first mobile device 1000 according to some embodiments.

As illustrated in FIG. 14, the first mobile device 1000 according to some embodiments may include a memory (storage unit) 1700, a communication unit 1500, and a controller 1300. However, not all of the components illustrated in FIG. 14 are necessary components of the first mobile device 1000. The first mobile device 1000 may be implemented by more components than the components illustrated in FIG. 14, or may be implemented by less components than the components illustrated in FIG. 14.

For example, as illustrated in FIG. 15, the first mobile device 1000 according to some embodiments may further include a user input unit 1100, an output unit 1200, a sensing unit 1400, and an audio/video (A/V) input unit 1600 in addition to the memory 1700, the communication unit 1500, and the controller 1300.

The user input unit 1100 may mean a unit for the user to input data to control the first mobile device 1000. For example, the user input unit 1100 may include, but is not limited to, a key pad, a dome switch, a touch pad (e.g., a capacitive overlay type, a resistive overlay type, an infrared beam type, a surface acoustic wave type, an integral strain gauge type, or a piezoelectric type), a jog wheel, and a jog switch.

The output unit 1200 may output an audio signal, a video signal, or a vibration signal and may further include a display unit 1210, an audio output unit 1220, and a vibration motor 1230.

The audio output unit 1220 may output audio data received from the communication unit 1500 or stored in the memory 1700.

In general, the controller 1300 may control an overall operation of the first mobile device 1000. For example, the controller 1300 may control the overall operations of the user input unit 1100, the output unit 1200, the sensing unit 1400, the communication unit 1500, and the A/V input unit 1600 by executing the programs stored in the memory 1700. Also, by executing the programs stored in the memory 1700, the controller 1300 may perform the functions of the first mobile device 1000 described with reference to FIGS. 1 to 13.

The controller 1300 may transmit/receive data to/from the second mobile device 2000, the payment server 3000, and the shop terminal 4000 through the communication unit 1500. The controller 1300 may include instructions for performing an operation of receiving the identifier of the second mobile device 2000 from the second mobile device 2000 through short-range communication, an operation of adding the second mobile device 2000 to the payment group 5000 including the first mobile device 1000 based on the received identifier of the second mobile device 2000, an operation of transmitting the group information of the payment group 5000 to the payment server 3000, an operation of transmitting the identification information of the payment group 5000 to the shop terminal 400 for payment for a product, and an operation of receiving, from the payment server 3000, a payment authorization request for the payment amount of the first mobile device 1000 allocated to the first mobile device 1000 among the total payment amount of the product. Here, the group information may include information about the payment amount of the first mobile device 1000 and information about the payment amount of the second mobile device 2000. Also, the group information may include the identifier of the first mobile device 1000, the identifier of the second mobile device 2000, the payment amount of the first mobile device 1000, and the payment amount of the second mobile device 2000. Here, the identifier of the first mobile device 1000 may be at least one of the phone number of the first mobile device 1000, the user ID of the payment application for payment, and the vehicle number of the user of the first mobile device 1000. Also, the identification information of the payment group 5000 may be a virtual credit card number representing the payment group 5000.

The sensing unit 1400 may detect a state of the first mobile device 1000 or a state around the first mobile device 1000 and transmit the detected information to the controller 1300.

The communication unit 1500 may include one or more components for the first mobile device 1000 to communicate with the second mobile device 2000, the payment server 3000, the shop terminal 400, and other devices (not illustrated). For example, the communication unit 1500 may include a short-range communication unit 1510, a mobile communication unit 1520, and a broadcast receiving unit 1530.

The short-range communication unit 1510 may include, but is not limited to, a Bluetooth communication unit, a Bluetooth Low Energy (BLE) communication unit, a near field communication unit, a WLAN (WiFi) communication unit, a ZigBee communication unit, an infrared data association (IrDA) communication unit, a WiFi Direct (WFD) communication unit, an Ultra Wideband (UWB) communication unit, and an Ant+ communication unit.

The mobile communication unit 1520 may transmit/receive wireless signals to/from at least one of a base station, an external terminal, and the payment server 3000 on a mobile communication network. Herein, the wireless signals may include voice call signals, video call signals, or various types of data for transmission and reception of text/multimedia messages.

The broadcast receiving unit 1530 may receive broadcast signals and/or broadcast-related information from external devices through broadcast channels. The broadcast channels may include satellite channels and terrestrial channels. In some embodiments, the first mobile device 1000 may not include the broadcast receiving unit 1530.

The A/V input unit 1600 may be used to input audio signals or video signals and may include a camera 1610 and a microphone 1620.

The memory 1700 may store one or more programs for processing and controlling the operations of the controller 1300, and may store data that is input to the first mobile device 1000 or output from the first mobile device 1000.

The memory 1700 may include at least one type of storage medium from among flash memory type, hard disk type, multimedia card micro type, card type memory (e.g., SD or XD memory), random-access memory (RAM), static random-access memory (SRAM), read-only memory (ROM), electronically erasable programmable read-only memory (EEPROM), programmable read-only memory (PROM), magnetic memory, magnetic disk, and optical disk.

The programs stored in the memory 1700 may be classified into a plurality of modules according to their functions and may be classified into, for example, a user interface (Ul) module 1710, a touch screen module 1720, and a notification module 1730.

The UI module 1710 may provide a specialized UI and a graphical user interface (GUI) that interlock with the first mobile device 1000 for respective applications. The touch screen module 1720 may detect a touch gesture of the user on the touch screen and transmit information about the touch gesture to the controller 1300. According to some embodiments, the touch screen module 1720 may recognize and analyze a touch code. The touch screen module 1720 may include separate hardware including a controller.

The notification module 1730 may generate a signal for notifying the occurrence of an event in the first mobile device 1000. Examples of the event occurring in the first mobile device 1000 may include call signal reception, message reception, key signal input, and schedule notification.

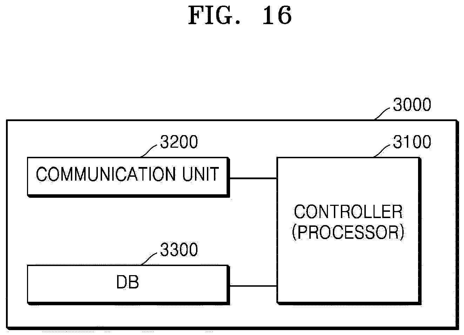

FIG. 16 is a block diagram of the payment server 3000 according to some embodiments.

Referring to FIG. 16, the payment server 3000 according to some embodiments may include a communication unit 3200, a database (DB) 3300, and a controller (processor) 3100.

The communication unit 3200 may include one or more components for communicating with the first mobile device 1000, the payment server 3000, and other devices (not illustrated). The communication unit 3200 may receive the group information of the payment group 5000 from the first mobile device 1000 and transmit the identification information to the first mobile device 1000. Also, the communication unit 3200 may receive a payment request for the payment group 5000 from the shop terminal 4000 and request payment approval from each of the first mobile device 1000 and the second mobile device 2000. Also, the communication unit 3200 may transmit the payment approval result to the shop terminal 4000.

The DB 3300 may store the group information received from the first mobile device 1000. Also, the DB 3300 may register the identification information representing the payment group 5000.

The controller 3100 may control an overall operation of the payment server 3000. For example, the controller 3100 may control the overall operations of the DB 3300 and the communication unit 3200 by executing the programs stored in the DB 3300 of the payment server 3000. By executing the programs stored in the DB 3300, the controller 3100 may perform some of the operations of the payment server 3000 illustrated in FIGS. 1 to 13.

The controller 3100 may generate the identification information of the payment group 5000 by using the group information received from the first mobile device 1000. When receiving a payment authentication request from the shop terminal 4000, the controller 3100 may request payment authentication of a split payment amount from each of a plurality of mobile devices included in the payment group 5000 by using the identification information and the group information of the payment group 5000. Also, the controller 3100 may approve the product payment by receiving a response to the payment authentication request from the first mobile device 1000 and the second mobile device 2000.

Some embodiments may also be implemented in the form of a computer-readable recording medium including instructions executable by a computer, such as program modules executed by a computer. The computer-readable recording medium may be any available medium accessible by a computer and may include all of volatile or non-volatile mediums and removable or non-removable mediums. Also, the computer-readable recording medium may include all of computer storage mediums and communication mediums. The computer storage mediums may include all of volatile or non-volatile mediums and removable or non-removable mediums that are implemented by any method or technology to store information such as computer-readable instructions, data structures, program modules, or other data. For example, the communication mediums may include any information transmission medium and may include other transmission mechanisms or other data of modulated data signals such as computer-readable instructions, data structures, or program modules.

Also, herein, a "unit" may include a hardware component such as a processor or a circuit, and/or a software component executed by a hardware component such as a processor.

The foregoing is illustrative of embodiments of the present disclosure and is not to be construed as limiting thereof. Although the embodiments have been described above, those of ordinary skill in the art will readily understand that various modifications may be made therein without materially departing from the spirits or features of the present disclosure. Therefore, it is to be understood that the embodiments described above should be considered in a descriptive sense only and not for purposes of limitation. For example, elements described as being combined may also be implemented in a distributed manner, and elements described as being distributed may also be implemented in a combined manner.

Therefore, the scope of the present disclosure is defined not by the detailed description of the embodiments but by the following claims, and all changes or modifications derived from the meaning and scope of the following claims and equivalent concepts thereof should be construed as being included in the scope of the present disclosure.

## Claims

1. A first mobile device comprising:
a memory storing at least one program;
at least one communication unit transmitting/receiving data to/from a shop terminal, a payment server, and a second mobile device; and
a processor executing the at least one program to provide data for product payment,
wherein the at least one program comprises instructions for performing:
receiving an identifier of the second mobile device from the second mobile device through short-range communication;
adding the second mobile device to a payment group including the first mobile device, based on the received identifier of the second mobile device;
transmitting group information of the payment group to the payment server;
transmitting identification information of the payment group to the shop terminal for payment for a product; and
receiving, from the payment server, a payment authentication request for a payment amount of the first mobile device allocated to the first mobile device from among a total payment amount of the product,
wherein the group information comprises information about a payment amount of the first mobile device and information about a payment amount of the second mobile device.

2. The first mobile device of claim 1, wherein the group information comprises an identifier of the first mobile device, an identifier of the second mobile device, a payment amount of the first mobile device, and a payment amount of the second mobile device.

3. The first mobile device of claim 2, wherein the identifier of the first mobile device comprises at least one of a phone number of the first mobile device, a user identification (ID) of a payment application for the payment, and a vehicle number of a user of the first mobile device.

4. The first mobile device of claim 1, wherein the adding of the second mobile device to the payment group comprises adding the second mobile device to the payment group as a contact with the second mobile device is detected.

5. The first mobile device of claim 1, wherein the identification information of the payment group is provided from the payment server to the first mobile device and is registered in the payment server for payment by the payment group.

6. The first mobile device of claim 5, wherein the identification information of the payment group comprises a virtual credit card number representing the payment group.

7. The first mobile device of claim 1, wherein the identification information of the payment group provided to the shop terminal is provided from the shop terminal to the payment server, and
the payment amount of the first mobile device is determined by the payment server based on the group information and the identification information of the payment group provided from the shop terminal to the payment server.

8. The first mobile device of claim 1, further comprising determining the payment amount of the first mobile device and the payment amount of the second mobile device.

9. The first mobile device of claim 1, further comprising receiving the payment amount of the second mobile device from the second mobile device; and
adding the received payment amount of the second mobile device to the group information.

10. The first mobile device of claim 1, further comprising determining a payment rate of the first mobile device and a payment rate of the second mobile device,
wherein the group information comprises the determined payment rate of the first mobile device and the determined payment rate of the second mobile device.

11. A method of providing data for product payment, the method comprising:
receiving an identifier of a second mobile device from the second mobile device through short-range communication;
adding the second mobile device to a payment group including a first mobile device, based on the received identifier of the second mobile device;
transmitting group information of the payment group to a payment server;
transmitting identification information of the payment group to a shop terminal for payment for a product; and
receiving, from the payment server, a payment authentication request for a payment amount of the first mobile device allocated to the first mobile device from among a total payment amount of the product,
wherein the group information comprises information about a payment amount of the first mobile device and information about a payment amount of the second mobile device.

12. The method of claim 11, wherein the group information comprises an identifier of the first mobile device, an identifier of the second mobile device, a payment amount of the first mobile device, and a payment amount of the second mobile device.

13. The method of claim 12, wherein the identifier of the first mobile device comprises at least one of a phone number of the first mobile device, a user identification (ID) of a payment application for the payment, and a vehicle number of a user of the first mobile device.

14. The method of claim 12, wherein the identifier of the first mobile device comprises at least one of a phone number of the first mobile device, a user identification (ID) of a payment application for the payment, and a vehicle number of a user of the first mobile device.

15. The method of claim 11, wherein the identification information of the payment group is provided from the payment server to the first mobile device and is registered in the payment server for payment by the payment group.

16. The method of claim 15, wherein the identification information of the payment group comprises a virtual credit card number representing the payment group.

17. The method of claim 11, wherein the identification information of the payment group provided to the shop terminal is provided from the shop terminal to the payment server, and
the payment amount of the first mobile device is determined by the payment server based on the group information and the identification information of the payment group provided from the shop terminal to the payment server.

18. The method of claim 11, further comprising determining the payment amount of the first mobile device and the payment amount of the second mobile device.

19. The method of claim 11, further comprising determining a payment rate of the first mobile device and a payment rate of the second mobile device,
wherein the group information comprises the determined payment rate of the first mobile device and the determined payment rate of the second mobile device.

20. A non-transitory computer-readable recording medium that stores a program that, when executed by a computer, performs the method of claim 11.
